Europäisches Patentamt

European Patent Office

Office européen des brevets

(11) Publication number: **0 393 463**
**A2**

# EUROPEAN PATENT APPLICATION

(21) Application number: **90106778.5**

(22) Date of filing: **09.04.90**

(51) Int. Cl.⁵: **G21B 1/00**

(30) Priority: **20.04.89 JP 103096/89**

(43) Date of publication of application:
**24.10.90 Bulletin 90/43**

(84) Designated Contracting States:
**DE FR GB**

(71) Applicant: **SEMICONDUCTOR ENERGY
LABORATORY CO., LTD.**
**398 Hase**
**Atsugi-shi Kanagawa-ken, 243(JP)**

(72) Inventor: **Yamazaki, Shunpei**
**21-21, Kitakarasuyama, 7-chome,**
**Setagaya-ku**
**Tokyo 157(JP)**

(74) Representative: **Patentanwälte Grünecker,
Kinkeldey, Stockmair & Partner**
**Maximilianstrasse 58**
**D-8000 München 22(DE)**

(54) **Electrode for nuclear fusion and method for using the same.**

(57) An electrode structure is comprised of a pair of electrodes provided in a reaction vessel for causing a nuclear fusion reaction with deuterium or a deuterium compound in a gaseous or liquid state, at least one of the electrodes having a surface portion which is made of a reactive material for nuclear fusion reaction and a base which is tightly connected with the surface portion, wherein a heat exchange medium is introduced from a heat exchange device into the base and out from the base to the heat exchange device after heated by nuclear fusion reaction.

FIG.1

## BACKGROUND OF THE INVENTION

### Field of the Invention

The present invention relates to a method and apparatus of attaining improved reliability in the implementation of a nuclear fusion reaction usig an electrode to cause vapor phase reaction or liquid phase reaction, and specifically to a method and apparatus of using the electrode to take out the energy produced in the nuclear fusion reaction through a heat exchange system.

### Description of the Prior Art

A nuclear fusion reaction by electrochemical process, which is referred to as cold nuclear fusion, has been attained and reported by S.E. Jones et al. The paper is entitled "Observation of Cold Nuclear Fusion in Condensed Matter" and was authored by S.E. Jones, E.P. Palmer, J.B. Crirr, D.L. Decler, G.L. Jensen, J.M. Thorne, S.F. Taylor, (all of Brigham Young University), and J. Rafelski (University of Arizona).

In this reaction, a pair of electrodes comprising a palladium or titanium cathode and a gold or platinum anode are inserted into a solution containing heavy water ($D_2O$), and a DC voltage is applied across these electrodes. In addition, the electrochemical nuclear fusion reaction is carried out at an atmospheric pressure.

Because of the fact that this reaction is carried out in an aqueous solusion in a normal environment, there is little possibility deuterium (D) atoms combine with other deuterium atoms to produce the nuclear fusion.

Nuclei of deuterium are created at a portion of the cathode and simultaneously the fusion reaction of deuterium nuclei are caused at the same portion.

Also, since a solusion is used, palladium which is used as a catalyst for combining the deuterium atoms is easily poisoned to be coated with a poisoned film of inactive substance, whereby the extent of catalyst reactivity is deteriorated, and it is difficult to break down the poisoned film to produce a uniform nuclear fusion. For this reason, there is a high degree of variation and a lack of reproducibility in the nuclear fusion reaction. In addition, because of the occurrence of electrochemical side reactions which takes place simultaneously with the nuclear fusion, most of the products of the reaction decompose and the deuterium is eventually released in a gas into the atmosphere. As a result, the amount of deuterium actually used in the nuclear fusion reaction is considerably less than expected. Therefore, a method of reliably controlling the nuclear fusion reaction with a high probability of nuclear fusion occurring is further required.

## SUMMARY OF THE INVENTION

An object of the present invention is to provide, with due consideration to the drawbacks of such a prior art reaction system, a method and apparatus of attaining improved reliability in the implementation of a nuclear fusion reaction using a highly pure deuterium ($D_2$) or a compound of deuterium such as heavy water ($D_2O$) in a gaseous or liquid state.

Another object of the present invention is to provide a method and apparatus of attaining improved reliability in the implementation of a nuclear fusion reaction efficiently taking out the energy obtained in the nuclear fusion reaction of the activated deuterium to outside.

In the present invention, neutrons generated in the reaction are released to a base with a chamber disposed behind a reactive material for nuclear fusion reaction. The chamber is filled with a heat transfer medium such as water ($H_2O$) by which the energy of neutrons is consumed. Thus, the energy of the neutrons is given to the medium for heat exchange. By releasing this heat energy to the outside through the medium, the energy produced by the nuclear fusion reaction, especially the heat energy of the fusion reaction, becomes a simple energy source and can be used industrially.

## BRIEF DESCRIPTION OF THE DRAWINGS

Figure 1 is a schematic illustration showing one embodiment of the plasma nuclear fusion reaction system in the present invention.

Figure 2 is a graph showing a bias relationship between a pair of electrodes appearing in Figure 1.

Figure 3 is a graph showing the neutron count measured by the neutron counter used in one embodiment of the present invention.

Figure 4 is a schematic illustration showing one experimental apparatus using liquid for nuclear fusion reaction, in which a pair of electrodes are provided for heat exchange according to the present invention.

## DETAILED DESCRIPTION OF THE PREFERRED EMBODIMENTS

In the nuclear fusion reaction in the present invention, a solution for nuclear fusion reaction material used in the prior art nuclear fusion process is not adopted, but 98% pure or better deuterium ($D_2$) or a compound of such deuterium such as heavy

water ($D_2O$) in a gaseous or liquid state is used with the remaining being made up of hydrogen ($H_2$) and 100 PPM or less of other matter.

By doing so, the probability of generating nuclear fusion is increased and energy produced by the nuclear fusion reaction is more efficiently let to go out of the reaction system with less energy escaping.

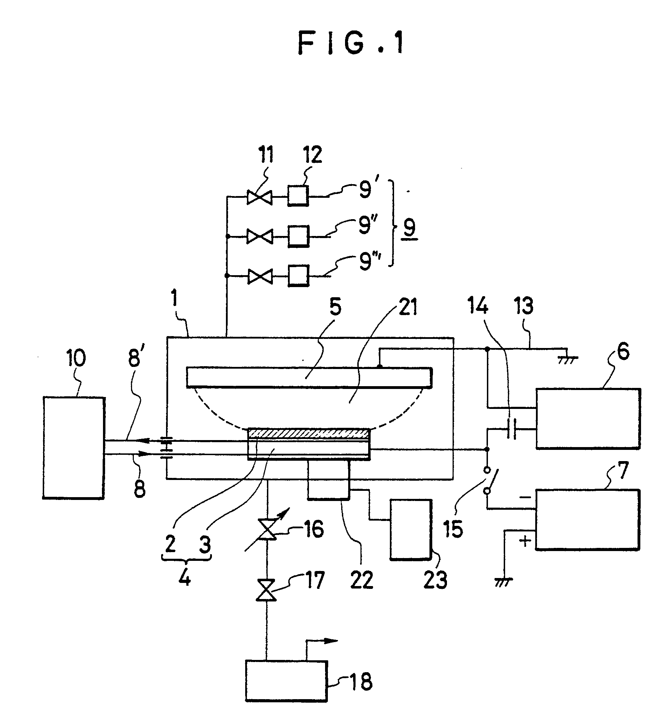

Figure 1 gives a description of the plasma vapor nuclear fusion system using deuterium ($D_2$) or a compound of such deuterium such as heavy water ($D_2O$) in a gaseous state.

Provided inside a nuclear fusion reaction vessel (1) which is capable of maintaining a reduced pressure for plasma generating is a pair of electrodes (5) and (4), that is anode (5) and cathode (4). The cathode (4) is formed with a palladium surface (2) and a hollow base (3) placed behind the palladium surface (2) and having a chamber therein. The hollow base (3) is made of a stainless steel. The cathode (4) is formed by sputtering palladium on the base (3).

In order to apply a negative self bias to the cathode (4), the cathode (4) has a sufficiently smaller electrode area than the anode (5).

Provided to apply a negative bias to the cathode (4) is a DC power supply (7) having a switch means (15) for the cathode (4) on the minus side with the plus side earthed or grounded.

Provided to apply a high frequency voltage between 500KHz and 500MHz is a high frequency power supply (6) which is earthed or grounded on the anode side (13) and provided with a capacitor (14) so as to prevent the DC bias from being introduced.

Provided to take out the energy of neutrons is a heat exchange device (10) which has an input line (3) and an output line (8') for a heat exchange medium such as water.

Provided for reactive gases is a gas system (9) including Helium (He) by line (9'), Deuterium ($D_2$) by line (9'') and Hydrogen ($H_2$) by line (9'''). They pass through a flow meter (12) and a valve (11) and then enter the present plasma nuclear fusion reaction system.

The reaction vessel (1) is provided with an exhaust system containing a pressure control valve (16) and a stop valve (17) and an exhaust pump (18) to obtain a plasma generating pressure between 0.001 and 760 Torr.

Deuterium ($D_2$) or a compound of deuterium such as heavy water ($D_2O$) in a gaseous state is introduced in the reaction vessel (21), which is ionized through electric energy application.

In addition, an electric field is applied from outside for negative bias to attract the deuterium ions to a surface portion of the reactive material (2) for causing nuclear fusion reaction thereon. The reactive material (2) is typically made of palladium or titanium.

Since the palladium is costive, the reactive material (2) is made thin, less than 1 mm, and the base (3) is made of a conductive material, so that the reactive material (2) is provided on the base (3) to form an electrode (4). Consequently, the layer of palladium with more than 1000Å thickness has an efficiently low electric resistance, which provides an inexpensive electrode (4).

Palladium can be coated on the base (3) of stainless steel, cupper and so on through a CVD process such as sputtering or electroplating.

Deuterium atoms are produced on or close to the surface of the reactive material (2) causing nuclear fusion reaction.

The neutrons (n) are detected by the neutron counter (22) placed adjacent to the reaction vessel (1) for evidence of the cold nuclear fusion, specifically detecting the existence and amount of the neutrons produced there.

From the facts that the neutrons (n) are thus detected, the following nuclear fusion reaction can be expected as possible.

$$d + d \longrightarrow {}^3He(0.82 \text{ MeV}) + n(2.45 \text{ MeV})$$

At the same time the following reaction can also be expected.

$$d + d \longrightarrow P(3.02 \text{ MeV}) + t(1.01 \text{ MeV})$$

As a result of the nuclear fusion reaction, the neutrons collide the heat transfer medium (for example water) in the chamber located behind the palladium electrode (2) carrying an energy of 2.45 MeV producing a rise in temperature, by which an energy exchange as in the formula above is detected.

Energy of neutrons generated by the nuclear fusion reaction is absorbed by the heat transfer medium such as water contained in the base (3) behind the reactive material (4). The neutrons collide the water to increase its temperature, and the water is introduced out to the heat exchange device (10) to take out the energy.

The existence of the neutrons are detected also using the neutron spectrometer (22) as mentioned above.

The production of neutrons and also the rise in temperature of the medium increases proportionally as the plasma pressure in the reaction vessel (1) is increased and also as the applied electric energy is increased.

The DC bias voltage can be increased from -100V to -1000V. Of course the voltage could have been increased more than this, but there is the danger of explosions; specifically, increasing the reaction efficiency too high will be followed by explosion.

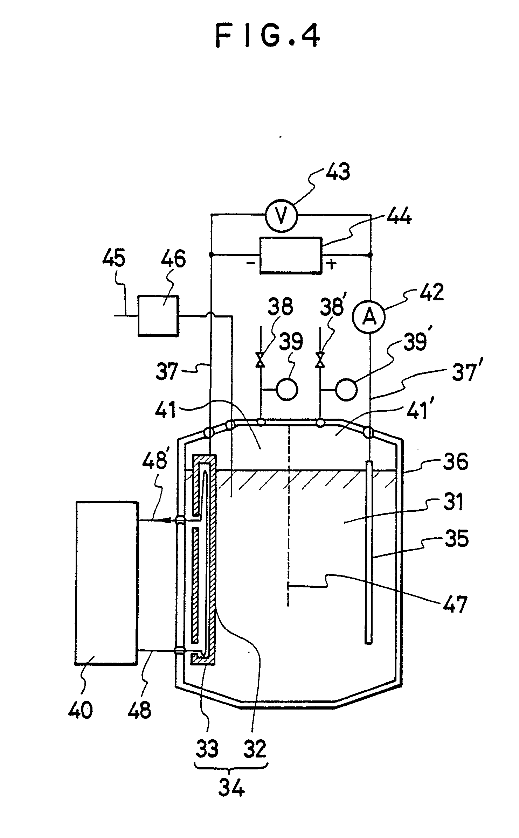

Figure 4 gives a description of the plasma vapor nuclear fusion system using deuterium ($D_2$)

or a compound of such deuterium such as heavy water ($D_2O$) in a liquid state. The structure in Figure 4 is modified from the view point of using liquid, but essentially has common elements as those in the structure in Figure 1 using gas. Details on the structure in Figure 4 are given in Example 4.

The present invention will be more clearly understood by reading the following examples.

EXAMPLE 1

Using the apparatus as shown in Fig.1, a plasma vapor nuclear fusion reaction was carried out as follows;

A pair of electrodes (5) and (4), that is anode (5) and cathode (4) were formed inside the nuclear fusion reaction vessel (1) capable of maintaining a reduced pressure for plasma generating. The cathode (4) was formed with a palladium surface (2) and a hollow base (3) behind the palladium surface (2), and the hollow base (3) is formed with a chamber therein. The hollow base (3) was made of a stainless steel. The cathode (4) was formed by sputtering palladium on the base (3).

The cathode (4) had a sufficiently smaller electrode area than the anode (5), so that a negative self bias was applied to the cathode (4).

The negative bias was also applied from the DC power supply (7) to the cathode (4) through the switch means (15).

A high frequency voltage between 500KHz and 500MHz, for example 13.56MHz was applied from the high frequency power supply (6).

When the power supply from the high frequency power supply (6) was zero, and only the DC voltage was applied to the pair of electrodes (4) and (5), and the DC plasma discharge was generated.

Water as the heat exchange medium was desirably used in the heat exchange device (10) to consume the energy of neutrons by converting it to heat energy.

Reactive gases such as deuterium were introduced to the reaction system from the gas system (9) through the flowmeter (12) and the valve (11). Thus, Helium (He), Deuterium ($D_2$) and Hydrogen ($H_2$) are added as required.

The reaction vessel (1) was kept at a plasma generating pressure between 0.001 and 760 Torr, for example 0.1 Torr using the pressure control valve (16) and the stop valve (17) and the exhaust pump (18).

Thus, nuclear fusion reaction was found to occur in this example.

EXAMPLE 2

In the equipment of Figure 1, the cathode (4) with a diameter of 10 cm was made of palladium or titanium coating (2) on the hollow base (3), and the anode (5) with a diameter of 20 cm was made over the cathode (4).

The high frequency supply (6) was operated at a value of 13.56 MHz, and the electric power was applied between 50 to 500 W, for example 200 W. No DC voltage is applied from the variable DC power supply (7).

A flow of 20cc/min of deuterium in the form of high purity deuterium gas was made through gas line (9''). In order to produce plasma in the space (21), the exhaust line was adjusted and the pressure was kept at 0.1 Torr.

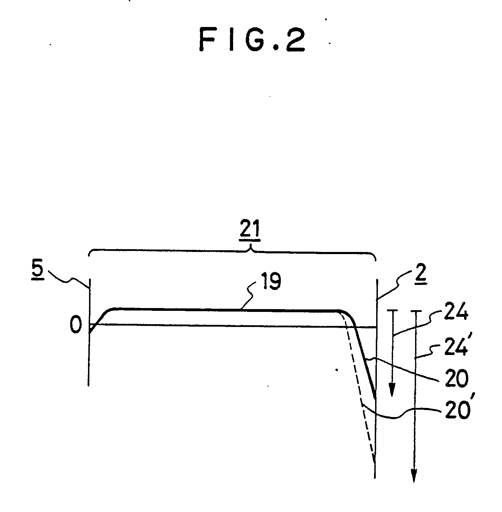

Fig.2 shows a potential across the plasma space (21), wherein a positive column (19) and a voltage drop (20) caused by a negative self bias appear between the anode (5) and the cathode (4). And the potential (24) difference between the positive column (19) and the cathode (4) is -183V.

It is expected that the impact of deuterium in positive ions reduce and remove any filth from the palladium surface (2) to activate the palladium, and that the following nuclear fusion reaction is then obtainable;

$$d + d \longrightarrow {}^3He(0.82 \text{ MeV}) + n(2.45 \text{ MeV}).$$

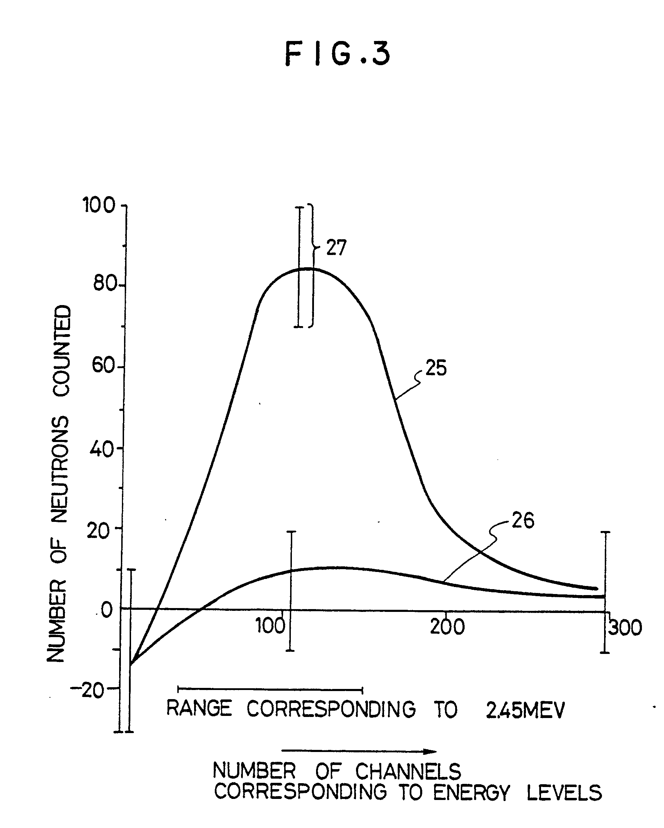

In Figure 3, the abscissa is the number of channels corresponding to the energy and the ordinate axis is the neutron count.

It is concluded after making several measurements that although the variation of width (27) from top to bottom is found to be large, the neutron count in the region corresponding to the neutron energy is apparently increased and so makes it possible to confirm the existence of the above formula.

In this example, the neutron counter (22) clearly confirmed the existence of neutrons. The existence of this nuclear fusion reaction was also confirmed by the experiences that the temperature of the reaction rose and a temperature rise of the water inside the heat transfer vessel (10) was observed. The water temperature rose from room temperature to nearly 40 °C. When the plasma was maintained, the nuclear fusion reaction stably continued for nearly 500 hours.

In trying to disprove that no nuclear fusion reaction occurs with another substance other than the deuterium, hydrogen was added by way of line (9''), as shown in Figure 1, and the plasma reaction was attempted under the same conditions.

In Figure 3, when hydrogen ($H_2$) is used, the neutron count is found to be the same as the background level. The curve (26) showing this neutron count is shown in Figure 3. The neutron count (26) obtained under these conditions is apparently different from the count (25) obtained when deuterium is used. This clearly confirms that nuclear fusion has occurred in this example using the deuterium.

EXAMPLE 3

When switch (15) of the variable DC power supply (7) in Figure 1 was turned on, a negatively biased direct current was added to a high frequency voltage which was applied to the pair of electrodes (4) and (5). This bias voltage was progressively added from -50 V to -1000 V.

When this was done, the number of collisions of the deuterium ions with the palladium surface portion (2) was increased due to the direct current bias. As a result, it was easier to produce more deuterium nuclei.

The bias voltage (24′) of Figure 2 was increased by the bias voltage (20′). The bias voltage was controlled by using the variable DC power supply (7). By doing so, the neutron count at location 100 of Figure 3 increased from the value of 40 in average which occurred when no DC bias was applied to the range of 40 to nearly 80.

It should be noted that the result of the exterior negative bias is very remarkable.

EXAMPLE 4

According to Figure 4, a liquid of heavy water was used in a nuclear fusion reaction vessel (36).

In this embodiment of the present invention, a solution of heavy water ($D_2O$) containing a predetermined metal salt was retained in the reaction vessel (36) of atmospheric pressure type or pressurized type. This metal salt is selected from the group of $FeSO_4 \cdot 7H_2O$, $NiCl_2 \cdot 6H_2O$, $PdCl_2$, $CaCO_3$, $LiSO_4 \cdot 10H_2O$, $CaH_4(PO_4)_2 \cdot H_2O$, $TiSO_4 \cdot H_2SO_4 \cdot 8H_2O$ and so on.

A pair of electrodes (34) and (35) were used for cathode and anode respectively. The electrode for the cathode was comprised of a cupper hollow base (33) which was generally coated with a reactive material (32) such as palladium by sputtering.

The base (33) was provided with a chamber therein filled with a heat exchange medium such as water. The heat exchange medium was introduced from a heat exchanger (40) to the chamber through an input line (48) and, after heated, introduced out to the heat exchanger (40) through an output line (48′). Thus, the energy of neutrons were effectively took out to outside.

The pair of electrodes (34) and (35) were supplied with a continuous or pulsed DC voltage from a DC power supply (44). A voltmeter (43) and an ammeter (42) were used for measurement.

A shield plate (47) of lithium glass was provided between the electrodes (34) and (35) to prevent unnecessary reaction products of deuterium ($D_2$) in a first space portion (41) and oxygen ($O_2$) in a second space portion (41′) from being mixed with each other.

The deuterium and oxygen were used to increase the pressure in the reaction vessel. In addition, a pair of safety valves (38) and (38′) were used to control the pressure between the atmospheric pressure and 100 atm. When the pressure was too high, only the oxygen was released to outside and the deuterium was confined to the vessel (36) for nuclear fusion reaction. A pair of pressure gauges (39) and (39′) were provided for adjustment of the pressure. A DC power source (44) was connected to the electrodes (34) and (35) respectively through a pair of leads, which were electrically isolated from the reaction vessel (36).

In this example, the reaction vessel (36) produced for an experiment purpose was sized so that at most about 20 cc of reactants could be charged into the reaction vessel (36). However, if this nuclear fusion reaction are to be used for industrial purposes, the size of the reaction vessel (36) can be increased, so that a charge of 10 to $10^4$ times this amount may be accommodated, or it would be possible to use a plurality of such small reaction vessels juxtaposed. In addition, a supplementary supply of the solution may be continuously charged into the reaction vessel (36) from an external source (45) of solution through a pressure charging system (46).

In this experiment example, 10 cc of heavy water ($D_2O$) containing a salt were charged into the high pressure reaction vessel (36). The salt used was $NiCl_2.6H_2O$, which was added in the ratio of 0.13 vol% of the heavy water. The pH of the solution was adjusted to 2.8 by the addition of nitric acid. A continuous DC voltage was applied between the palladium electrode (34) as the cathode and the gold electrode (35) as the anode.

In the experiment, deuterium ($D_2$) was produced at the cathode (34) and neutrons were detected by a neutron counter (omitted from the drawing). At this time, when the reaction was occurring at atmospheric pressure, a count of only about 4, in another words 3 to 10, was observed at an energy of 2.5 MeV, but, for example, when the duty ratio was increased to 75%, the count number increased by about 6 times or 50%. The "duty ratio of 75%" means that the voltage is applied for 45 seconds in a single minute with no voltage for 15 seconds.

In addition, water was circulated through the heat exchanger (46) and the base (33), and heat generation in this circulated water was clearly observed. The deuterium in the first space portion (41) and in the second space portion oxygen (41′) generated from this pressurized nuclear fusion reaction were not released to atmosphere but were confined within the high-pressure reaction vessel (36) to increase the pressure therein. Then a predetermined pressure could desirably be maintained by ejecting through the safety valves any gaseous materials which were not required. In this example, oxygen gas was ejected as unnecessary gaseous material. This release of oxygen was also made to prevent a secondary electrochemical heat generation reaction between deuterium and oxygen in the pressurized state to prevent a sudden generation of heat.

By means of the present invention, it has become possible to continuously carry on an artificial nuclear fusion reaction, controlling the extent of the reaction, which had been deemed impossible to perform in the prior art technology. For this reason, the present invention has extremely large industrial implications.

There are many modifications possible in the present invention. For example, the efficiency of the heat exchangers to remove energy from the reaction vessel can further be increased, so that removal as boiling water at 100°C to 150°C is possible by improving and making scale-up the nuclear fusion reaction device.

In addition, other modifications are possible within the scope of the present invention.

## Claims

1. An electrode structure comprising a pair of electrodes provided in a reaction vessel for nuclear fusion reaction, at least one of the electrodes having a surface portion which is made of a reactive material for nuclear fusion reaction and a base which is tightly connected with the surface portion, an input and output means for a heat exchange medium, and a heat exchange device wherein the heat exchange medium is introduced through the input and output means from the heat exchange device into the base and out from the base to the heat exchange device after heated by nuclear fusion reaction.

2. A method of using an electrode structure comprising the steps of providing a pair of electrodes in a reaction vessel for nuclear fusion reaction, at least one of the electrodes having a surface portion which is made of a reactive material for nuclear fusion reaction and a base which is tightly connected with the surface portion, providing an input and output means for a heat exchange medium and a heat exchange device, so that the heat exchange medium is introduced through the input and output means from the heat exchange device into the base and out from the base to the heat exchange device after heated by nuclear fusion reaction, introducing into the reaction vessel for nuclear fusion a gaseous member selected from the group of deuterium and a compound of deuterium, making the gaseous member into plasma, and applying a negative bias to the at least one of the electrodes to produce the nuclear fusion reaction around the surface portion.

3. A method of using an electrode structure comprising the steps of providing a pair of electrodes in a reaction vessel for nuclear fusion reaction, at least one of the electrodes having a surface portion which is made of a reactive material for nuclear fusion reaction and a base which is tightly connected with the electrode, providing an input and output means for a heat exchange medium and a heat exchange device, so that the heat exchange medium is introduced through the input and output means from the heat exchange device into the base and out from the base to the heat exchange device after heated by nuclear fusion reaction, introducing into the reaction vessel for nuclear fusion a liquid member selected from the group of deuterium and a compound of deuterium, and applying a negative bias to the at least one of the electrodes to produce the nuclear fusion reaction around the surface portion in the liquid member.

4. An electrode structure for use in a nuclear fusion reaction vessel comprising a surface portion made of a reactive material for nuclear fusion and a hollow base tightly connected to the surface portion, the reactive material being selected from the group of palladium and titanium, so that a nuclear fusion reaction occurs around the surface portion, and the hollow base being adapted to contain a heat transfer medium and communicated in a heat exchange relationship with outside the reaction vessel.

EP 0 393 463 A2

# F I G . 1

EP 0 393 463 A2

# FIG.2

# F I G . 3

NUMBER OF CHANNELS
CORRESPONDING TO ENERGY LEVELS

# F I G . 4